# EUROPÄISCHE PATENTSCHRIFT

(11) **EP 2 111 762 B1**
(45) Veröffentlichungstag und Bekanntmachung des Hinweises auf die Patenterteilung: **24.04.2013**
(21) Anmeldenummer: 09158231.2
(22) Anmeldetag: 20.04.2009
(51) Int. Cl.: A23G 3/02, A23G 3/00, A23G 3/20, A23G 3/54

(54) **Vorrichtung und Verfahren zur kontinuierlichen Herstellung einer laminierten Süßwarenmasse**
Method and device for continuous production of a laminated confectionary mass
Dispositif et procédé de fabrication en continu d'une masse de confiserie laminée

(30) Priorität: 22.04.2008 DE 102008001305
(43) Veröffentlichungstag der Anmeldung: 28.10.2009
(73) Patentinhaber: Chocotech GmbH, 38855 Wernigerode (DE)
(72) Erfinder: Fleisch, Jens, 38855 Wernigerode (DE); Preisler, Alexander, 38855 Wernigerode (DE); Hilker, Erhard, 32657 Lemgo (DE)
(74) Vertreter: Rehberg Hüppe + Partner

(56) Entgegenhaltungen:
- EP-A1- 1 247 454
- DE-A1- 2 013 203
- DE-A1- 2 604 983
- DE-U1- 29 600 397

## Beschreibung

### TECHNISCHES GEBIET DER ERFINDUNG

Die Erfindung betrifft eine Vorrichtung und ein Verfahren zur kontinuierlichen Herstellung einer laminierten Süßwarenmasse aus mindestens einer Grundmasse und mindestens einer Trennmasse.

Unter der kontinuierlichen Herstellung einer laminierten Süßwarenmasse wird eine solche Herstellung verstanden, bei der die laminierte Süßwarenmasse quasi kontinuierlich anfällt oder abgezogen und sodann einer weiteren Verarbeitung zugeführt wird, etwa im Gegensatz zu einer satzweisen und somit diskontinuierlichen Herstellung.

Die laminierte Süßwarenmasse und die daraus hergestellten Produkte, insbesondere Halwa, bestehen aus mindestens zwei Massen, nämlich einerseits einer Grundmasse und andererseits einer Trennmasse. Die Grundmasse kann insbesondere eine gekochte oder geschmolzene Zuckermasse sein. Die Trennmasse ist eine Fettmasse oder eine Fett enthaltende Masse. Typisch ist, dass die beiden Massen bei Raumtemperatur unterschiedliche Festigkeiten aufweisen. So kann die gekochte oder geschmolzene Grundmasse bei Raumtemperatur wieder eine feste Masse darstellen, während die Trennmasse plastisch verformbar und geschmeidig bleibt. Während der Herstellung der laminierten Süßwarenmasse muss jedoch auch die Grundmasse plastisch verformbar sein. Sie kann während des oder nach dem Laminierungsprozess erstarren.

### STAND DER TECHNIK

Eine Vorrichtung zur kontinuierlichen Herstellung von Halwa ist aus dem deutschen Gebrauchsmuster DE296 00 397U1 bekannt. Die Vorrichtung weist einen gehäuseartigen Stator und zwei Rotore auf. Die Rotore sind in Form einer Doppelschnecke mit Schneckenwellen und Wendeln ausgebildet. Der Stator besitzt einen Doppelmantel, mit dem er z. B. mit Dampf beheizt wird. Die Drehachsen des Stators und der beiden Rotore sind horizontal ausgerichtet angeordnet. Der Stator besitzt einen ersten Einlass für eine Trennmasse in Form einer Ölsaatpaste. Die Grundmasse, z. B. türkischer Honig oder Karamellmasse, wird in einem Fadenformer in Form eines Fadenziehkopfs in einzelne Fäden gezogen, die der Trennmasse durch einen zweiten Einlass hinzugefügt werden. Der Fadenziehkopf ist außen auf den Stator aufgesetzt, so dass das Ziehen der Grundmasse ohne Trennmasse außerhalb der Anlage aus Stator und Doppelschnecke erfolgt. Die so vorgeformten Fäden werden der Vorrichtung mit der Doppelschnecke zugeführt, so dass sie mit der dort bereits befindlichen Trennmasse mit Hilfe der Doppelschnecke geknetet, miteinander vermischt und gefördert werden. Die Doppelschnecke dient dem Kneten, Mischen und Fördern der beiden Massen. Am Auslauf der Vorrichtung befindet sich ein Auslass mit verengtem Querschnitt. Der Laminiergrad der erzeugten Süßwarenmassen ist weitgehend durch den vorgeschalteten Fadenformer bestimmt.

Produkte mit laminierter Struktur sind seit langem **allgemein im Stand der Technik** bekannt. Sie wurden zunächst rein manuell satzweise hergestellt. Dabei wird die Grundmasse als Schicht ausgebreitet und die Trennmasse auf die Schicht der Grundmasse aufgegeben. Durch wiederholtes Falten, Zugabe weiterer Trennmasse und verringernder Schichtdicke entsteht ein dünnes flächenmäßiges Gebilde mit einer Vielzahl von Schichten, ähnlich wie dies bei der Herstellung von Blätterteig bekannt ist.

Bei der satzweisen Herstellung einer solchen laminierten Süßwarenmasse ist auch die Verwendung einer Vorrichtung **allgemein im Stand der Technik** bekannt. Die Vorrichtung ist als Hub-Knet-Menger ausgebildet und besitzt eine etwa in Form einer Ellipse angetriebenen Knetarm, der in einen Trog einreichend bewegt wird und die in dem Trog befindlichen Massen bearbeitet. Der Trog wird als Rotor um eine vertikal ausgerichtete Drehachse angetrieben. Diese satzweise Herstellung erfordert manuelle Fähigkeiten und kontinuierliche Überwachung. Ein reproduzierbares Arbeitsergebnis ist nur schwer erreichbar.

Weiterhin sind aus einem anderen Bereich des Stands der Technik Maschinen zum Ziehen von Zuckermasse zu Fäden bekannt, beispielsweise aus der deutschen Patentanmeldung DE 23 16 468 oder auch der DE 26 04 983**.** Dabei finden angetriebene Zieharme Verwendung, die bevorzugt vertikal ausgerichtet sind und somit Stränge aus der Zuckermasse in die Länge ziehen. Es wird nur eine einzige Grundmasse verarbeitet, so dass laminierte Süßwarenmassen damit nicht herstellbar sind.

### AUFGABE DER ERFINDUNG

Der Erfindung liegt die Aufgabe zugrunde, eine Vorrichtung und ein Verfahren zur kontinuierlichen Herstellung einer laminierten Süßwarenmasse mit fadenförmiger Struktur, insbesondere Halwa, aufzuzeigen, mit der die Masse reproduzierbar maschinell hergestellt und der Laminiergrad effektiv eingestellt werden kann.

### LÖSUNG

Die Aufgabe der Erfindung wird erfindungsgemäß mit den Merkmalen der unabhängigen Patentansprüche 1 bzw. 8 gelöst.

### BESCHREIBUNG DER ERFINDUNG

Eine Vorrichtung zur kontinuierlichen Herstellung einer laminaren Süßwarenmasse aus mindestens einer Grundmasse und mindestens einer Trennmasse weist einen gehäuseartigen Stator und einen darin um eine Drehachse angetriebenen seelenlosen Rotor auf. Am Stator ist mindestens ein Einlass für die beiden Massen, bevorzugt jedoch zwei voneinander getrennte separate Einlässe, vorgesehen. Es ist ein von den Einlässen getrennter Auslass gebildet, über den die laminierte Süßwarenmasse am Ende austritt. Zwischen dem Rotor und dem Stator ist eine Bearbeitungsstrecke zum Zusammenfügen der Grundmasse und der Trennmasse, zum Benetzen der Grundmasse mit der Trennmasse, zum Ziehen der mit der Trennmasse benetzten Grundmasse sowie zum Fördern und Zusammenfügen der gezogenen Massen in Längsrichtung der Vorrichtung gebildet.

Es sind laminierte Süßwarenmassen bekannt, die eine vorzugsweise flächige Struktur aufweisen. Ein typisches Beispiel hierfür ist Blätterteig, bei dem meist größere Flächenelemente der Grundmasse durch die Trennmasse separiert sind. Die vorliegende Erfindung ist nicht auf die Erzeugung solcher flächig laminierten Süßwarenmassen gerichtet, sondern auf solche Massen, die eine fadenförmige Struktur aufweisen, wie dies insbesondere bei Blätterkrokant oder Halwa (auch als Halawa oder Halawa Tahina bezeichnet) der Fall ist. Die laminierte Süßwarenmasse liegt dabei in Fadenform vor, bei der mehr oder weniger dünne Fäden aus der Grundmasse mit der Trennmasse ummantelt sind, so dass die Fäden voneinander getrennt sind und nicht miteinander verkleben können. Die einzelnen Fäden dieser laminierten Süßwarenmasse liegen meist nicht ausgerichtet parallel nebeneinander, sondern eher in Form eines Wollknäuels oder einer verfilzten Matte vor und hängen über die Trennmasse zusammen. Als Trennmasse kann eine wasserfreie oder wasserarme Fettmasse, die nicht mit der Grundmasse verklebt und die nach der Verarbeitung bei Raumtemperatur weicher bleibt als die Zuckermasse, eingesetzt werden.

Produkte aus solchen laminierten Süßwarenmassen besitzen einerseits die beschriebene fadenförmige Struktur und eine dadurch hervorgehobene besondere Biss-Charakteristik. Die Massen unterscheiden sich auch voneinander in der Laminierung, was Ergebnis eines höheren bzw. niedrigeren Laminiergrads ist. Der Laminiergrad lässt sich beeinflussen durch die Dicke der Fäden der gezogenen Grundmasse, durch die Anzahl der Fäden und durch das Verhältnis von Grundmasse zu Trennmasse. Wichtig ist es bei der Herstellung solcher laminierten Süßwarenmassen, dass der Laminiergrad gleichmäßig ist und möglichst reproduzierbar erreicht werden kann.

Neben der Grundmasse und der Trennmasse kann die Vorrichtung noch weitere Einlässe aufweisen, die insbesondere über die Länge der Bearbeitungsstrecke verteilt angeordnet sein können, um Zusatzmassen, wie Aromen, Pulver, insbesondere Milchpulver, Emulgatoren und/oder Rework hinzuzufügen. Die Drehzahl des angetriebenen Rotors ist vorzugsweise regelbar und einstellbar. Es wird ein Bereich von 2-15 U/min, insbesondere 3-6 U/min, bevorzugt. Als besonders günstig hat sich eine Drehzahl im Bereich von 5 U/min erwiesen. Der Stator und/oder der Rotor können temperierbar ausgebildet sein. Für den Stator ergibt sich dies durch Anordnung eines Doppelmantels, der von einem Temperiermedium durchflossen wird.

Der Rotor weist Elemente zum Fördern, Ziehen, Benetzen und Zusammenfügen der Massen längs der Bearbeitungsstrecke vom Einlass zum Auslass zur Erzeugung der laminierten Süßwarenmasse auf. Diese Elemente sind so auszubilden und anzuordnen, dass sie die angesprochenen Funktionen erfüllen. Das Erfordernis dieser Funktionen kann über die Bearbeitungsstrecke durchaus unterschiedlich sein, so dass die Elemente auch entsprechend über die Länge der Bearbeitungsstrecke verteilt angeordnet sind bzw. wechselnd in Wirkung treten. Zu Beginn der Bearbeitungsstrecke steht das Fördern der beiden Massen und das Inkontaktbringen im Vordergrund, während im Mittel- bis Endbereich der Bearbeitungsstrecke das Ziehen, Benetzen und Zusammenfügen der Massen im Vordergrund steht, wobei sich auch hier eine Förderung einstellt, die jedoch gleichsam von selbst abläuft. Die Elemente zum Fördern, Ziehen, Benetzen und Zusammenfügen der beiden Massen sind so ausgebildet und angeordnet, dass sie einerseits auf die Charakteristiken der beiden Massen abgestimmt sind, aber andererseits auch den Einfluss der Schwerkraft ermöglichen. Zu diesem Zweck ist es erforderlich, einen oder mehrere Freiräume im Innenraum des Stators zu bilden, die auch nicht von am Rotor angebrachten Elementen verdeckt werden. Diese Freiräume dienen dazu, Masseanhäufungen in Schlaufenform beim Umlauf des Rotors von oberen Bereichen in Richtung auf unsere Bereiche herabfallen zu lassen, wobei auch während dieses Fallvorgangs ein Ziehen und damit eine Durchmesserverringerung an Massesträngen stattfinden. Auf diese Art und Weise entsteht die angestrebte wollknäuelartige oder filzartige Struktur der laminierten Süßwarenmasse mit Fadencharakteristik, bei der die Fäden nicht aneinanderkleben, sondern nebeneinander in leicht verschiebbarer Anordnung mit der besonderen Bisscharakteristik anfallen. Um den gezielten Einfluss der Schwerkraft zu ermöglichen, ist der Rotor und der Stator mit gemeinsamer Drehachse horizontal ausgerichtet angeordnet. Die Ausrichtung kann in der Grundstellung bereits etwas geneigt oder auch exakt horizontal ausgerichtet ausgebildet sein. Sinnvoll ist es, wenn die Neigung der Drehachse ein- und verstellbar ist, um auf diese Art und Weise auf die Verweilzeit der Massen längs der Behandlungsstrecke Einfluss zu nehmen und die Förderung mehr oder weniger zu begünstigen. Diese Maßnahmen sind auch bestimmend für den Laminiergrad, ebenso wie die angewendete Drehzahl des Rotors, die Länge der Bearbeitungsstrecke, das Verhältnis der Mengen der eingesetzten Grundmasse und der Trennmasse sowie gegebenenfalls der Zusatzmassen.

Als Elemente zum Fördern, Ziehen, Benetzen und Zusammenfügen der Massen längs der Bearbeitungsstrecke vom Einlass zum Auslass kommen insbesondere eine oder mehrere seelenlose Wendel, Schabekämme, Ziehdorne, Stifte, hakenförmige Elemente und dergleichen in Frage. Der Einsatz der seelenlosen Wendel ist insbesondere auf den Anfangsbereich der Bearbeitungsstrecke beschränkt, um hier einerseits die beabsichtigte Förderwirkung in Gang zu setzen und andererseits den Einfluss der Schwerkraft nicht auszuschalten. Eine solche seelenlose Wendel schafft den angesprochenen Freiraum, so dass das Versperren des Freiraums durch den Schaft einer Antriebswelle zumindest in diesem Bereich verhindert wird. Schabekämme, die gerade oder gezahnt ausgebildet sein können, können zu mehreren über den Umfang verteilt insbesondere im Anfangsbereich der Bearbeitungsstrecke vorgesehen sein. Sie können mit der seelenlosen Wendel verbunden sein, um gemeinsam einen Teil des Rotors zu bilden. Ziehdorne, Stifte und Haken sind eher im zweiten Teil der Bearbeitungsstrecke angeordnet. Sie dienen dazu, beim rotierenden Antrieb des Rotors immer wieder in die Masse einzugreifen, Masseschlaufen auf ihrem Weg nach oben mitzunehmen und sodann abzuwerfen, wobei sowohl während der Aufwärtsbewegung als auch dem nachfolgenden Abwurf Zieheffekte an der Masse auftreten. Diese Ziehdorne oder Ziehhaken sind vorzugsweise nicht exakt radial ausgerichtet, sondern geneigt zur Drehrichtung des Rotors in einer Stellung zwischen radialer und tangentialer Anordnung, so dass sie die schlaufenförmigen Massenbereiche während ihrer Aufwärtsbewegung nach oben mitnehmen und im oberen Bereich eine Abwurffunktion erfüllen, bei der die Masseschlaufen infolge der Ummantelung der gezogenen Fäden der Grundmasse vermittels der Trennmasse von den Dornen abrutschen und herabfallen.

Es ist auch möglich, zusätzlich zu den erläuterten Elementen in dem im Rotor gebildeten Freiraum bewegliche, insbesondere angetriebene Elemente zum Ziehen, Benetzen und Zusammenfügen der Massen vorzusehen. Diese Anordnung darf jedoch nicht dazu führen, dass der Schwerkrafteinfluss gänzlich beseitigt wird, weil der verbleibende Freiraum zu klein wird. Die Ausbildung und Anordnung der verschiedenen Elemente ändert sich zweckmäßig, wie oben beschrieben, über die Länge der Bearbeitungsstrecke, so dass auch die zusätzlichen angetriebenen Elemente insbesondere im zweiten Teil der Bearbeitungsstrecke angeordnet sind und durch den ohnehin offenen Auslass in maschinell einfacher Weise so angeordnet werden können, dass sie in den Innenraum des Stators einragen und dort ihre Funktion erfüllen.

Bei dem erfindungsgemäßen Verfahren werden die Massen zunächst am Einlass einer Vorrichtung zur kontinuierlichen Herstellung einer laminierten Süßwarenmasse in Massenform eingebracht. Grundsätzlich handelt es sich um mindestens eine Grundmasse und mindestens eine Trennmasse. Die Grundmasse ist zuckerhaltig und die Trennmasse ist fetthaltig. Die Massen werden generell ohne eine besondere Vorbehandlung eingebracht. Selbstverständlich ist es möglich bzw. erforderlich, die Grundmasse vorher zu kochen. Die Grundmasse muss auch die für ihre Plastizität erforderliche Temperatur aufweisen. Dies schließt nicht aus, dass die Grundmasse auch in belüfteter Form eingebracht werden kann. Auch die Trennmasse weist beim Einbringen eine entsprechende Temperatur auf, die in der Regel jedoch erheblich niedriger ist als die Temperatur der Grundmasse. Das Einbringen der Massen erfolgt insbesondere so, dass die Massen in Längsrichtung der Vorrichtung, also über die Behandlungsstrecke mit Abstand zueinander eingebracht werden, wobei zunächst die Trennmasse und erst anschließend die Grundmasse eingebracht wird.

Innerhalb der Vorrichtung, also in dem Innenraum des Stators, in dem der Rotor angeordnet ist, erfolgt das Zusammenfügen der Grundmasse und der Trennmasse am Anfang einer Bearbeitungsstrecke aus einem angetriebenen seelenlosen Rotor und einem gehäuseartigen Stator der Vorrichtung. Das Benetzen der Grundmasse mit der Trennmasse, das Ziehen der mit der Trennmasse benetzten Grundmasse, das Fördern und Zusammenfügen der gezogenen Massen, und dann das Ausbringen der laminierten Süßwarenmasse erfolgen längs der Bearbeitungsstrecke. Diese Bearbeitungsschritte finden längs einer Bearbeitungsstrecke aus dem Rotor und dem Stator in Längsrichtung der Vorrichtung statt. Dem Fördern kommt zunächst besondere Bedeutung im Anfangsbereich der Bearbeitungsstrecke zu, wobei die beiden Massen auch von der Innenwandung des Stators abgenommen, miteinander in Kontakt gebracht und gefördert werden. Dieser Bearbeitungsschritt erfolgt so, dass er unter Schwerkrafteinwirkung durchgeführt wird, so dass die Massen im Innern des Rotors bereits einen Freiraum vorfinden, in welchem sie in einer Art Taumelbewegung herabfallen können. Hieran schließt sich ein intensiver Ziehvorgang an, bei welchem die miteinander in Kontakt gebrachten Massen zu längsgerichteten Einheiten mit einer fadenförmigen Struktur verformt werden. Dabei sind sie oder werden sie mit der Trennmasse benetzt, was vorzugsweise über den gesamten Umfang der fadenförmig gezogenen Grundmassenelemente geschieht. Durch diese Benetzung mit der Trennmasse wird verhindert, dass fadenförmig gezogene Massenelemente der Grundmasse wieder direkt miteinander in Kontakt kommen und aneinander und miteinander verkleben können. Gleichwohl ist es erforderlich, die benetzten und umhüllten gezogenen Fäden der Grundmasse auch wieder zusammenzufügen, damit eine wollknäuelartige oder filzartige Struktur der laminierten Süßwarenmasse entsteht. Schließlich wird die laminierte Süßwarenmasse mehr oder weniger kontinuierlich ausgebracht, wobei diese Ausbringung durchaus mit wechselnder Menge in Klumpen oder Portionen erfolgen kann.

Vorzugsweise werden das Einbringen und/oder das Ausbringen kontinuierlich durchgeführt, wobei eine dosierte Zugabe der Trennmasse und der Grundmasse nacheinander erfolgen. Das Verhältnis von Grundmasse und Trennmasse kann in Bereichen insbesondere zwischen 30 % und 70 % variiert werden.

Es ist auch möglich, die Grundmasse und die Trennmasse ganz oder teilweise vorzumischen und in dieser vorgemischten Form in die Behandlungsstrecke einzubringen. Auch belüftete Grundmassen können in diesem Zusammenhang eingesetzt werden.

Es empfiehlt sich jedoch, die beiden Massen örtlich getrennt voneinander nacheinander in die in der Vorrichtung gebildete Bearbeitungsstrecke einzubringen. Die Grundmasse als gekochte Zuckermasse besitzt meist eine erhebliche Klebefähigkeit, so dass die Anhaftung der Zuckermasse an Elementen der Vorrichtung dadurch vermieden werden kann, dass zunächst die Trennmasse eingebracht wird, die eine vergleichsweise geringere Klebe- oder Haftfähigkeit besitzt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Vertikalschnitt durch eine erste beispielhafte Ausführungsform der Vorrichtung.
- **Fig. 2**: zeigt eine perspektivische Darstellung des Rotors der Vorrichtung gemäß Fig. 1.
- **Fig. 3**: zeigt einen Vertikalschnitt durch eine zweite beispielhafte Ausführungsform der Vorrichtung mit geneigt angestellter Rotationsachse.
- **Fig. 4**: zeigt einen Vertikalschnitt durch eine dritte beispielhafte Ausführungsform der Vorrichtung.

### FIGURENBESCHREIBUNG

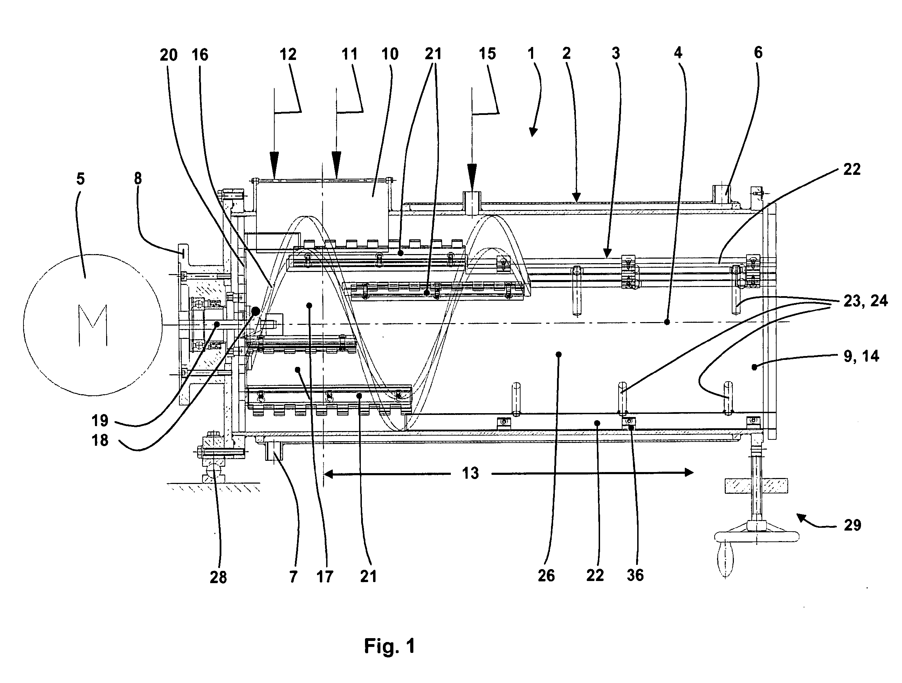

**Fig. 1** zeigt eine Vorrichtung 1, die einen gehäuseartig, also stillstehend angeordneten Stator 2 und einen im Innenraum des Stators 2 angeordneten Rotor 3 aufweist. Der Stator 2 und der Rotor 3 besitzen im Wesentlichen zylindrische Form mit gemeinsamer Drehachse 4. Der Rotor 3 wird über einen nur schematisch angedeuteten Motor 5 rotierend angetrieben, wobei relativ niedrige Drehzahlen in einem Bereich von 2 bis etwa 20 U/min Anwendung finden können. In der Antriebsstrecke können auch Untersetzungsgetriebe (nicht dargestellt) vorgesehen sein.

Der Stator 2 kann zur Temperierung, insbesondere zur Abführung von Wärme, an einen Temperier- bzw. Kühlkreislauf angeschlossen sein. Der Kühlkreislauf kann im Gegenstrom wirkend zu einem Anschlussstutzen 6 herangeführt sein, wobei das Kühlmedium über einen Stutzen 7 abgezogen wird. Ansonsten stellt der Stator 2 ein stillstehendes Gehäuse mit zylindrischer Innenwand dar, welches auf der Motorseite mit einer Stirnwand 8 geschlossen ausgebildet ist, durch die der Antrieb des Rotors 3 hindurchgeführt ist. Auf der dem Motor 5 abgewandten Seite ist der Stator 2 offen gestaltet und bildet einen Auslass 9. Ansonsten weist der Stator 2 einen vom Auslass 9 getrennten Einlass 10 auf. Der Einlass 10 dient dem Einbringen einer Grundmasse 11 und einer Trennmasse 12. Statt eines gemeinsamen Einlasses 10 können auch separate Einlässe beabstandet hintereinander angeordnet sein, so wie es die Pfeile für die Einbringung der Trennmasse 12 und der Grundmasse 11 nacheinander verdeutlichen.

Bei der Grundmasse 11 handelt es sich um eine gekochte Zuckermasse oder jedenfalls eine zuckerhaltige Masse, die sich relativ hoch erwärmt, insbesondere gekocht in einem plastischen verarbeitungsfähigen Zustand befindet. Bei der Trennmasse 12 handelt es sich um eine Fettmasse oder eine fetthaltige Masse, z. B. Nussnougat, Sesampaste, Erdnusspaste oder dergleichen, die auch nach erfolgter Verarbeitung z. B. bei Raumtemperatur weich und verschieblich ist, während die Grundmasse 11 bei Raumtemperatur feste und spröde Eigenschaften besitzt, wie sie beispielsweise von Hartbonbons bekannt sind.

Zwischen dem Einlass 10 und dem Auslass 9 wird eine Bearbeitungsstrecke 13 gebildet, die sich im Wesentlichen über die gesamte Länge des Rotors 3 und des Stators 2 erstreckt. Am Ende dieser Bearbeitungsstrecke 13 sind die Grundmasse 11 und die Trennmasse 12 zu einer laminierten Süßwarenmasse 14 verformt bzw. bearbeitet, die im Einzelnen nicht dargestellt ist. Diese laminierte Süßwarenmasse 14, insbesondere Halwa, weist fadenförmige Struktur auf, wobei je nach dem Zieh- und Laminiergrad die einzelnen Fäden unterschiedliche Durchmesser haben können und auch mit unterschiedlicher wollknäuelartiger oder filzartiger Struktur aneinanderliegen.

Bei der Herstellung der laminierten Süßwarenmasse 14 können neben der Grundmasse 11 und der Trennmasse 12 auch Zusatzmassen 15 eingebracht werden, bei diesen Zusatzmassen 15 kann es sich z. B. um Aromen, Farben, pulverartige Zusätze, Emulgatoren und dergleichen handeln. Der Zugabeort der Zusatzmassen 15 richtet sich nach der Temperaturempfindlichkeit der verschiedenen Massen. Die Grundmasse 11 wird vorzugsweise bei einer Temperatur von etwa 120 °C bis 140 °C gekocht und kann anschließend gekühlt werden. Während die Grundmasse 11 mit einer relativ hohen Einlasstemperatur, beispielsweise in der Größenordnung von etwa 80 °C bis 110 °C, eingebracht wird, hat die Trennmasse 12 am Anfang der Einbringung vorzugsweise eine Temperatur von etwa 40 °C bis 50 °C. Die Temperatur der vermischten und geförderten Grundmasse 11 und Trennmasse 12 nimmt über die Bearbeitungsstrecke 13 ab, ist jedoch noch so hoch, dass die laminierte Süßwarenmasse 14 weiter verformt und bearbeitet werden kann.

Der Rotor 3 ist aus verschiedenen Elementen aufgebaut bzw. zusammengesetzt, die teilweise unterschiedliche Funktionen erfüllen. Im ersten Teil der Bearbeitungsstrecke 13 ist eine seelenlose Wendel 16 angeordnet. Die seelenlose Wendel 16 umschließt einen Freiraum 17 im Innern. Der Freiraum 17 wird durch einen einragenden Wellenstummel 18 einer Antriebswelle 19 nur geringfügig beeinträchtigt. Die seelenlose Wendel 16 ist an einer Stirnscheibe 20 angesetzt, die ihrerseits mit der Antriebswelle 19 verbunden ist. Die seelenlose Wendel 16 erfüllt im Wesentlichen Förderfunktion für die Massen 11 und 12.

Zwischen der Wendel 16, d. h. zwischen den Gängen der Wendel 16, und der Stirnscheibe 20 sind Schabekämme 21 angeordnet, die sich im Wesentlichen axial, also parallel zur Drehachse 4 erstrecken und die gegenüber dem Umfang der Innenwandung des Stators 2 angestellt sind. Die Schabekämme 21 sind über den Umfang verteilt angeordnet und können schaberartigen Querschnitt aufweisen oder aber auch gezahnt ausgebildet sein, wie dies in Fig. 1 dargestellt ist. Die Schabekämme 21 dienen im Wesentlichen dazu, die beiden Massen 11 und 12 miteinander zu vermischen, immer wieder von der Innenwandung des Stators 2 abzunehmen und in einer taumelnden Bewegung zu halten, bei der auch der Einfluss der Schwerkraft im Freiraum 17 genutzt wird. Hierdurch findet bereits eine Vermengung der Massen 11 und 12 statt, dergestalt, dass einzelne Massenschlaufen aus der Grundmasse 11 gebildet werden, die von der Trennmasse 12 benetzt, also mehr oder weniger weitgehend eingeschlossen sind.

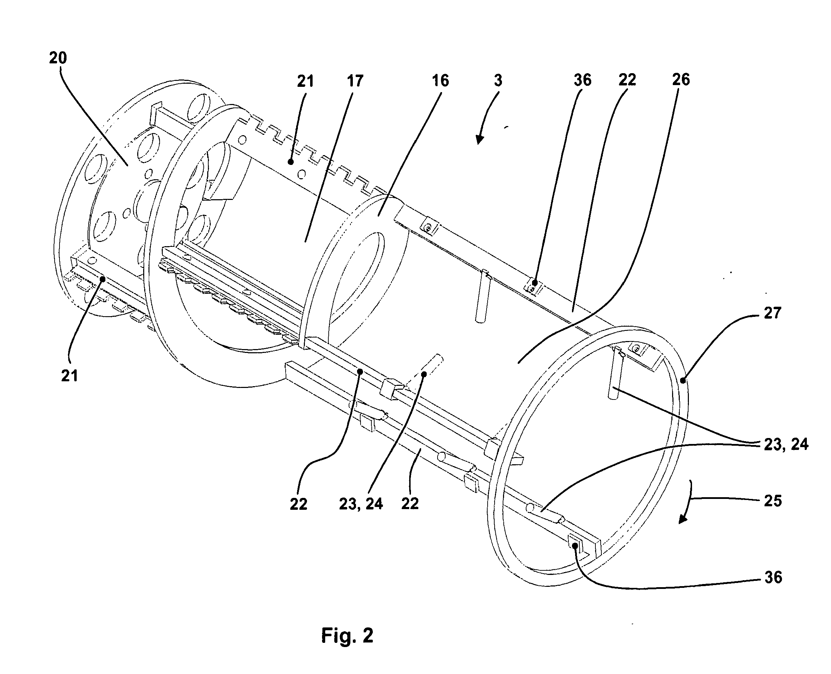

Auch im zweiten Teil der Bearbeitungsstrecke 13 in Richtung auf den Auslass 9 können kammartige Gebilde 22 vorgesehen sein, die ebenfalls unter Spaltbildung gegenüber der Innenwandung des Stators 2 angestellt sind und sich im Wesentlichen axial erstrecken. Diese kammartigen Gebilde 22 erfüllen auch eine Förderwirkung, dienen andererseits aber als Träger für Ziehdorne 23, die in ihrer Ausbildung und Anordnung besonders gut aus **Fig. 2** erkennbar sind. Die Ziehdorne 23 können die Form von Stiften 24 aufweisen, aber auch hakenartige oder gekrümmte Gestaltungen sind hier durchaus denkbar. Die Ziehdorne 23 bzw. Stifte 24 haben die Aufgabe, beim Antrieb und Umlauf des Rotors 3 schlaufenförmige Massenelemente aus den beiden Massen 11 und 12 immer wieder zu ergreifen und aufwärts zu fördern sowie im oberen Bereich nach unten abzuwerfen. Während der Aufwärtsbewegung findet ein Ziehen der Grundmasse 11 statt, d. h. der Durchmesser der fadenförmigen Gebilde wird verringert und ihre Länge vergrößert. Durch den Abwurf im oberen Bereich wird die Schwerkraft genutzt, um die gebildeten Schlaufen wieder zusammenzuführen und so eine wollknäuelartige oder filzartige Struktur der laminierten Süßwarenmasse 14 zu erzeugen. Je nach der Länge der Bearbeitungsstrecke 13 sowie weiterer Einflussgrößen kann der Laminiergrad der laminierten Süßwarenmasse 14 reproduzierbar, jedoch mit unterschiedlichen Arbeitsergebnissen, je nach Wunsch, eingestellt werden. Es ist erkennbar, dass auch im zweiten Teil der Bearbeitungsstrecke 13 ein Freiraum 26 vorgesehen bzw. gebildet ist, in welchen sich der Freiraum 17 fortsetzt bzw. der die gleiche Funktion wie der Freiraum 17 erfüllt. Auch hier kann sich die Schwerkrafteinwirkung auf die Massen 11 und 12 auswirken. Die kammartigen Gebilde 22 können auch mit Lagerelementen 36 versehen sein, die der frei auskragenden Lagerung des Rotors 3 im Stator 2 dienen. Die kammartigen Gebilde 22 können auslassseitig durch einen Tragring 27 miteinander verbunden sein, der auch insgesamt der Aussteifung des Rotors 3 dient (siehe Fig. 2).

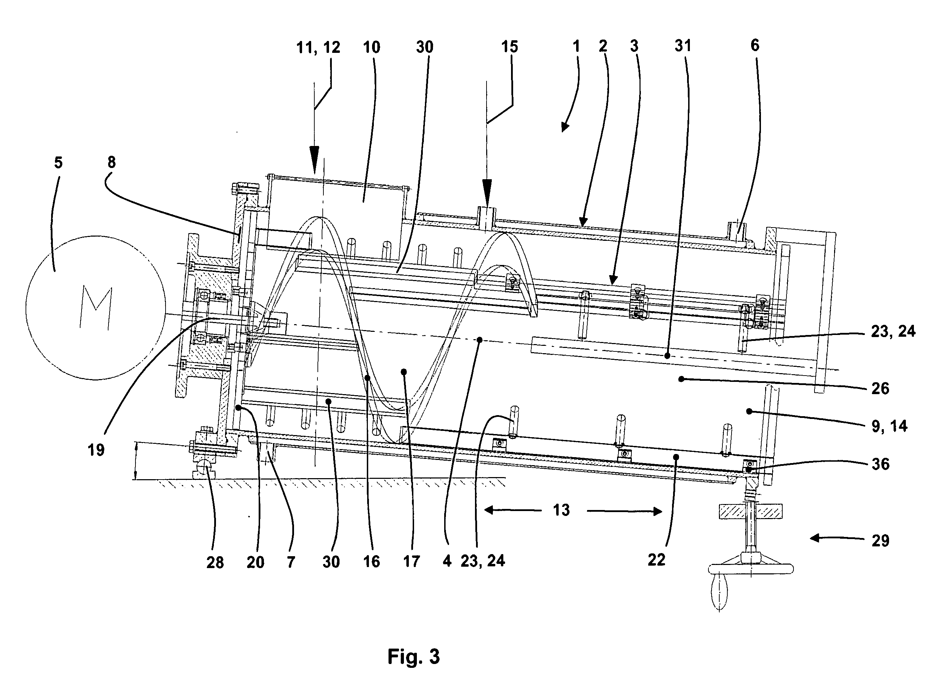

Aus Fig. 1 ist erkennbar, dass die Vorrichtung 1 mit horizontal ausgerichteter Achse 3 vorgesehen und angeordnet ist. Der Stator 2 kann jedoch auch über ein Lager 28 verfügen, welches in Verbindung mit einer Verstelleinrichtung 29 eine Veränderung und Anstellung der Neigung der Drehachse 4 erlaubt, wie dies in Fig. 3 angedeutet ist. Auch mit dieser Maßnahme wird auf den Laminiergrad Einfluss genommen. Die Neigung der Drehachse 4 begünstigt die Förderwirkung und verkürzt die Verweilzeit der beiden Massen 11 und 12 im Innenraum der Vorrichtung 1 bzw. entlang der Bearbeitungsstrecke 13.

**Fig. 3** zeigt eine weitere Ausführungsform der Vorrichtung 1 mit Stator 2 und Rotor 3. Die Vorrichtung 1 gemäß Fig. 3 baut im Wesentlichen auf der Ausführungsform der Fig. 1 und 2 auf. Statt oder zusätzlich zu den Schabekämmen 21 der Ausführungsform der Fig. 1 und 2 können hier Stiftleisten 30 vorgesehen sein, die zwischen der seelenlosen Wendel 16 angeordnet sind. Eine weitere Besonderheit dieser Ausführungsform gemäß Fig. 3 sieht einen Umschlagdorn 31 vor, der ausgangsseitig am Stator 2 gelagert ist und über den offenen Auslass 9 mittig, also in der Drehachse 4 ortsfest angeordnet ist. Je nach der Bewegung der Masseelemente, die im Innern im Bereich des Freiraums 26 erzeugt wird, kann der Umschlagdorn 31 auch etwas exzentrisch angeordnet sein. Seine Anordnung soll die Wirkung des Freiraums 26 nicht beseitigen, sondern lediglich dafür sorgen, dass schlaufenförmige Massepartien bei ihrer Aufwärtsbewegung und ihrem nachfolgenden Abwurf von den Ziehdornen 23 bzw. Stiften 24 auf den Umschlagdorn 31 gelangen und damit gleichsam wie auf einer Wäscheleine aufgehängt werden, wodurch die Ziehwirkung an den Fäden der Grundmasse 11 intensiviert wird. Da diese Ziehwirkung im Wesentlichen im zweiten Teil der Bearbeitungsstrecke 13 erwünscht ist, bleibt der erste Teil der Bearbeitungsstrecke 13 im Wesentlichen frei von einem solchen Umschlagdorn 31, so dass sich dort der Freiraum 17 ungehindert auswirken kann.

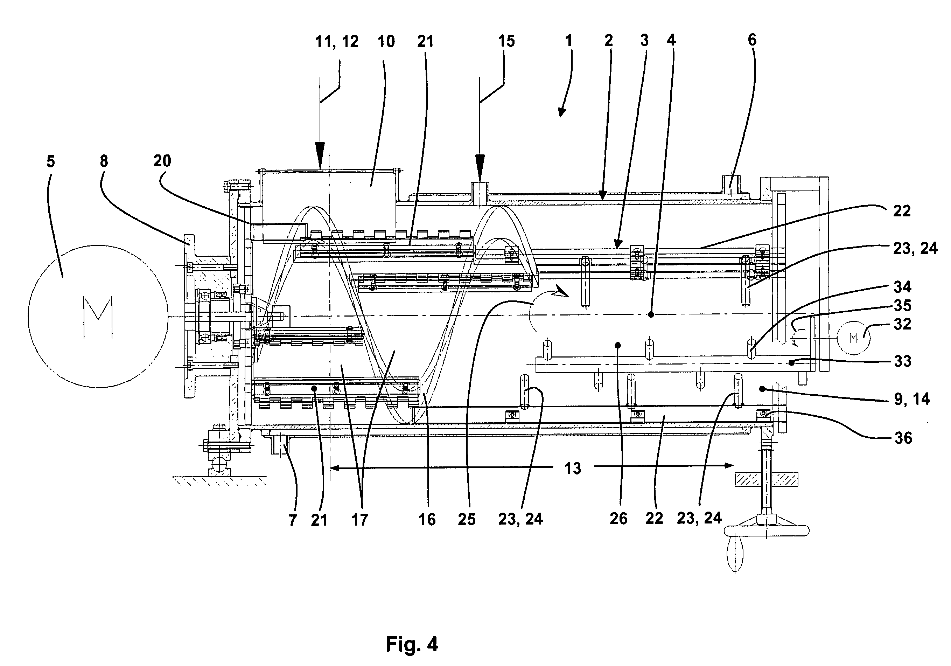

Die Ausführungsform gemäß **Fig. 4** zeigt eine Vorrichtung 1, die in wesentlichen Bereichen auf der Ausführungsform gemäß den Fig. 1 und 2 aufbaut. Im Unterschied hierzu ist jedoch ein angetriebenes Element vorgesehen, welches auf dem Stator 2 gelagert ist und über den offenen Auslass 9 in den Freiraum 26 einragt. Dieses Bearbeitungselement weist eine über einen Motor 32 angetriebene Welle 33 auf, die mit Stiften 34 besetzt ist, die in Relation zu den Ziehdornen 23 bzw. Stiften 24 angeordnet sind. Die Welle 33 wird vorzugsweise gegenläufig gemäß Pfeil 35 angetrieben. Auch diese Zusatzeinrichtung ist so ausgebildet und angeordnet, dass sie die Wirkung des Freiraums 26 möglichst wenig beeinträchtigt, aber andererseits dazu beiträgt, dass der Laminierungsgrad der laminierten Süßwarenmasse 14 erhöht werden kann.

### BEZUGSZEICHENLISTE

- 1: Vorrichtung
- 2: Stator
- 3: Rotor
- 4: Drehachse
- 5: Motor
- 6: Anschlussstutzen
- 7: Stutzen
- 8: Stirnwand
- 9: Auslass
- 10: Einlass
- 11: Grundmasse
- 12: Trennmasse
- 13: Bearbeitungsstrecke
- 14: laminierte Süßwarenmasse
- 15: Zusatzmasse
- 16: seelenlose Wendel
- 17: Freiraum
- 18: Wellenstummel
- 19: Antriebswelle
- 20: Stirnscheibe
- 21: Schabekamm
- 22: kammartiges Gebilde
- 23: Ziehdorn
- 24: Stift
- 25: Umlaufrichtung
- 26: Freiraum
- 27: Tragring
- 28: Lager
- 29: Verstelleinrichtung
- 30: Stiftleiste
- 31: Umschlagdorn
- 32: Motor
- 33: Welle
- 34: Stift
- 35: Pfeil
- 36: Lagerelement

## Patentansprüche

1. Vorrichtung (1) zur kontinuierlichen Herstellung einer laminierten Süßwarenmasse (14) aus mindestens einer Grundmasse (11) und mindestens einer Trennmasse (12), mit
einem gehäuseartigen Stator (2),
mindestens einem Einlass (10) für die Grundmasse (11) und die Trennmasse (12),
einem von dem Einlass (10) getrennten Auslass (9) für die laminierte Süßwarenmasse (14), **gekennzeichnet durch**
einen in dem gehäuseartigen Stator (2) um eine Drehachse (4) angetriebenen seelenlosen Rotor (3),
einen von dem Rotor (3) umschlossenen Freiraum (17),
eine zwischen dem Rotor (3) und dem Stator (2) gebildete Bearbeitungsstrecke (13) zum Zusammenfügen der Grundmasse (11) und der Trennmasse (12), zum Benetzen der Grundmasse (11) mit der Trennmasse (12), zum Ziehen der mit der Trennmasse (12) benetzten Grundmasse (11) in dem Freiraum (17) sowie zum Fördern und Zusammenfügen der gezogenen Massen (11, 12) in Längsrichtung der Vorrichtung (1).

2. Vorrichtung (1) nach Anspruch 1, **dadurch gekennzeichnet, dass** der Rotor (3) Elemente (16, 21, 22, 23, 24, 30) zum Fördern, Ziehen, Benetzen und Zusammenfügen der Grundmasse (11) und der Trennmasse (12) längs der Bearbeitungsstrecke (13) vom Einlass (10) zum Auslass (9) zur Erzeugung der laminierten Süßwarenmasse (14) aufweist.

3. Vorrichtung (1) nach Anspruch 1 oder 2, **dadurch gekennzeichnet, dass** der Rotor (3) mindestens einen Freiraum (26) zum Ziehen und Zusammenfügen der Grundmasse (11) und der Trennmasse (12) aufweist.

4. Vorrichtung (1) nach mindestens einem der Ansprüche 1 bis 3, **dadurch gekennzeichnet, dass** der Rotor (3) und der Stator (2) mit im Wesentlichen horizontal ausgerichteter Drehachse (4) angeordnet sind.

5. Vorrichtung (1) nach mindestens einem der Ansprüche 1 bis 4, **dadurch gekennzeichnet, dass** die Drehachse (4) in der Neigung einstellbar ausgebildet ist.

6. Vorrichtung (1) nach mindestens einem der Ansprüche 2 bis 5, **dadurch gekennzeichnet, dass** die Elemente (16, 21, 22, 23, 24, 30) zum Fördern, Ziehen, Benetzen und Zusammenfügen der Grundmasse (11) und der Trennmasse (12) längs der Bearbeitungsstrecke (13) vom Einlass (10) zum Auslass (9) eine seelenlose Wendel (16), Schabekämme (21), Ziehdorne (23) und/oder Stifte (24) aufweisen.

7. Vorrichtung (1) nach mindestens einem der Ansprüche 1 bis 6, **dadurch gekennzeichnet, dass** in dem im Rotor (3) gebildeten Freiraum (17, 26) bewegliche Elemente (33, 34) zum Ziehen, Benetzen und Zusammenfügen der Grundmasse (11) und der Trennmasse (12) angeordnet sind.

8. Verfahren zur kontinuierlichen Herstellung einer laminierten Süßwarenmasse (14) aus mindestens einer Grundmasse (11) und mindestens einer Trennmasse (12) mit einer Vorrichtung (1), insbesondere einer Vorrichtung (1) nach mindestens nach einem der Ansprüche 1 bis 7, mit den Schritten:
- Einbringen der Grundmasse (11) und der Trennmasse (12) an mindestens einem Einlass (10) der Vorrichtung (1),
- Zusammenfügen der Grundmasse (11) und der Trennmasse (12) am Anfang einer Bearbeitungsstrecke (13) aus einem angetriebenen seelenlosen Rotor (3) und einem gehäuseartigen Stator (2) der Vorrichtung (1),
- Benetzen der Grundmasse (11) mit der Trennmasse (12) längs der Bearbeitungsstrecke (13),
- Ziehen der mit der Trennmasse (12) benetzten Grundmasse (11) längs der Bearbeitungsstrecke (13),
- Fördern und Zusammenfügen der gezogenen Massen (11, 12) längs der Bearbeitungsstrecke (13), und
- Ausbringen der laminierten Süßwarenmasse (14).

9. Verfahren nach Anspruch 8, **dadurch gekennzeichnet, dass** das Einbringen und/oder das Ausbringen kontinuierlich durchgeführt werden.

10. Verfahren nach Anspruch 8 oder 9, **dadurch gekennzeichnet, dass** die Grundmasse (11) und die Trennmasse (12) örtlich getrennt voneinander nacheinander in die in der Vorrichtung (1) gebildete Bearbeitungsstrecke (13) eingebracht werden.

11. Verfahren nach mindestens einem der Ansprüche 8 bis 10, **dadurch gekennzeichnet, dass** die laminierte Süßwarenmasse (14) Halwa ist.

12. Verfahren nach mindestens einem der Ansprüche 8 bis 11, **dadurch gekennzeichnet, dass** die Grundmasse (11) eine Zuckermasse und die Trennmasse (12) eine Fettmasse oder eine Fett enthaltende Masse ist.

13. Verfahren nach mindestens einem der Ansprüche 8 bis 12, **dadurch gekennzeichnet, dass** die Grundmasse (11) und die Trennmasse (12) vor dem Einbringen am Einlass (10) der Vorrichtung (1) vorgemischt werden.

## Claims

1. An apparatus (1) for continuously producing a laminated confectionary mass (14) from at least one base mass (11) and at least one separating mass (12), comprising:
a stator (2) being designed as a housing,
at least one inlet (10) for the base mass (11) and the separating mass (12),
an outlet (9) for the laminated confectionary mass (14), the outlet (9) being separate from the inlet (10), **characterised by**
a rotor (3) being arranged in the stator (2) being designed as a housing, the rotor (3) being driven about a rotational axis (4), the rotor (3) not including a centre shaft,
a free space (17) being surrounded by the rotor (3),
a processing path (13) being formed between the rotor (3) and the stator (2) and serving for combining the base mass (11) and the separating mass (12), coating the base mass (11) with the separating mass (12), extracting the base mass (11) being coated with the separating mass (12) into the free space (17) and conveying and combining the extracted masses (11, 12) in the longitudinal direction of the apparatus (1).

2. The apparatus (1) of claim 1, **characterised in that** the rotor (3) includes elements (16, 21, 22, 23, 24, 30) for conveying, extracting, coating and combining the base mass (11) and the separating mass (12) along the processing path (13) from the inlet (10) towards the outlet (9) to produce the laminated confectionary mass (14).

3. The apparatus (1) of claim 1 or 2, **characterised in that** the rotor (3) includes at least one free space (26) serving for extracting and combining the base mass (11) and the separating mass (12).

4. The apparatus (1) of at least one of claims 1 to 3, **characterised in that** the rotor (3) and the stator (2) are arranged such that their rotational axis (4) is substantially horizontal.

5. The apparatus (1) of at least one of claims 1 to 4, **characterised in that** the rotational axis (4) is designed such that its declination is adjustable.

6. The apparatus (1) of at least one of claims 2 to 5, **characterised in that** the elements (16, 21, 22, 23, 24, 30) for conveying, extracting, coating and combining the base mass (11) and the separating mass (12) along the processing path (13) from the inlet (10) towards the outlet (9) include a helix (16) not including a centre shaft, scraping combs (21), mandrels (23) and/or pins (24).

7. The apparatus (1) of at least one of claims 1 to 6, **characterised in that** movable elements (33, 34) for extracting, coating and combining the base mass (11) and the separating mass (12) are arranged in the free space (17) being formed in the rotor (3).

8. A method for continuously producing a laminated confectionary mass (14) from at least one base mass (11) and at least one separating mass (12) with an apparatus (1), especially an apparatus (1) of at least one of claims 1 to 7, comprising the steps of:
- introducing the base mass (11) and the separating mass (12) at at least one inlet (10) of the apparatus (1),
- combining the base mass (11) and the separating mass (12) at the beginning of a processing path (13) of the apparatus (1) including a driven rotor (3) not including a centre shaft and a stator (2) being designed as a housing,
- coating the base mass (11) with the separating mass (12) along the processing path (13),
- extracting the base mass (11) being coated with the separating mass (12) along the processing path (13),
- conveying and combining the extracted masses (11, 12) along the processing path (13), and
- outputting the laminated confectionary mass (14).

9. The method of claim 8, **characterised in that** introducing and/or outputting is conducted in a continuous way.

10. The method of claim 8 or 9, **characterised in that** the base mass (11) and the separating mass (12) are introduced into the processing path (13) at different locations and one after the other.

11. The method of at least one of claims claim 8 to 10, **characterised in that** the laminated confectionary mass (14) is halva.

12. The method of at least one of claims claim 8 to 11, **characterised in that** the base mass (11) is a sugar mass and the separating mass (12) is a fat mass or a fat containing mass.

13. The method of at least one of claims claim 8 to 12, **characterised in that** the base mass (11) and the separating mass (12) are premixed before being introduced at the inlet (10) of the apparatus (1).

## Revendications

1. Dispositif (1) de fabrication en continu d'une masse de confiserie laminée (14) à partir d'au moins une masse de base (11) et au moins une masse de séparation (12), comprenant:
un stator du type d'un boîtier (2),
au moins une entrée (10) pour la masse de base (11) et la masse de séparation (12),
une sortie (9) séparée de l'entrée (10) pour la masse de confiserie laminée (14), **caractérisé par**
un rotor (3) sans âme entraîné autour d'un axe de rotation (4) dans le stator du type d'un boîtier (2),
un espace libre (17) délimité par le rotor (3),
une section de travail (13) formée entre le rotor (3) et le stator (2) destinée à assembler la masse de base (11) et la masse de séparation (12), à mouiller la masse de base (11) avec la masse de séparation (12), à étirer la masse de base (11) mouillée avec la masse de séparation (12) dans l'espace libre (17), ainsi qu'à transporter et à assembler les masses (11, 12) étirées dans la direction longitudinale du dispositif (1).

2. Dispositif (1) selon la revendication 1, **caractérisé en ce que** le rotor (3) comprend des éléments (16, 21, 22, 23, 24, 30) pour transporter, étirer, mouiller et assembler la masse de base (11) et la masse de séparation (12) le long de la section de travail (13) depuis l'entrée (10) jusqu'à la sortie (9) afin de produire la masse de confiserie laminée (14).

3. Dispositif (1) selon la revendication 1 ou 2, **caractérisé en ce que** le rotor (3) comprend au moins un espace libre (26) destiné à étirer et à assembler la masse de base (11) et la masse de séparation (12).

4. Dispositif (1) selon au moins l'une des revendications 1 à 3, **caractérisé en ce que** le rotor (3) et le stator (2) sont agencés avec un axe de rotation (4) dirigé sensiblement à l'horizontale.

5. Dispositif (1) selon au moins l'une des revendications 1 à 4, **caractérisé en ce que** l'axe de rotation (4) est réalisé de façon réglable au niveau de l'inclinaison.

6. Dispositif (1) selon au moins l'une des revendications 2 à 5, **caractérisé en ce que** les éléments (16, 21, 22, 23, 24, 30) pour transporter, étirer, mouiller et assembler la masse de base (11) et la masse de séparation (12) le long de la section de travail (13) depuis l'entrée (10) jusqu'à la sortie (9) comprennent un boudinage sans âme (16), des peignes de raclage (21), des mandrins d'étirage (23) et/ou des broches (24).

7. Dispositif (1) selon au moins l'une des revendications 1 à 6, **caractérisé en ce que** des éléments mobiles (33, 34) destinés à étirer, à mouiller et à assembler la masse de base (11) et la masse de séparation (12) sont agencés dans l'espace libre (17, 26) formé dans le rotor (3).

8. Procédé de fabrication en continu d'une masse de confiserie laminée (14) à partir d'au moins une masse de base (11) et au moins une masse de séparation (12) au moyen d'un dispositif (1), en particulier un dispositif (1) selon au moins l'une des revendications 1 à 7, comprenant les étapes consistant à:
- introduire la masse de base (11) et la masse de séparation (12) au niveau d'au moins une entrée (10) du dispositif (1),
- assembler la masse de base (11) et la masse de séparation (12) au début d'une section de travail (13) à partir d'un rotor entraîné sans âme (3) et d'un stator du type d'un boîtier (2) du dispositif (1),
- mouiller la masse de base (11) avec la masse de séparation (12) le long de la section de travail (13),
- étirer la masse de base (11) mouillée avec la masse de séparation (12) le long de la section de travail (13),
- transporter et assembler les masses (11, 12) étirées le long de la section de travail (13), et
- sortir la masse de confiserie laminée (14).

9. Procédé selon la revendication 8, **caractérisé en ce que** l'introduction et/ou la sortie sont réalisées en continu.

10. Procédé selon la revendication 8 ou 9, **caractérisé en ce que** la masse de base (11) et la masse de séparation (12) sont introduites l'une après l'autre de façon séparée localement l'une de l'autre dans la section de travail (13) formée dans le dispositif (1).

11. Procédé selon au moins l'une des revendications 8 à 10, **caractérisé en ce que** la masse de confiserie laminée (14) est du halwa.

12. Procédé selon au moins l'une des revendications 8 à 11, **caractérisé en ce que** la masse de base (11) est une masse de sucre et la masse de séparation (12) une masse de graisse ou une masse contenant de la graisse.

13. Procédé selon au moins l'une des revendications 8 à 12, **caractérisé en ce que** la masse de base (11) et la masse de séparation (12) sont prémélangées avant l'introduction au niveau de l'entrée (10) du dispositif (1).
